# FASCICULE DE BREVET EUROPEEN

(11) **EP 2 484 921 B1**
(45) Date de publication et mention de la délivrance du brevet: **21.08.2013**
(21) Numéro de dépôt: 12150869.1
(22) Date de dépôt: 12.01.2012
(51) Int. Cl.: F16B 5/02, F16B 35/04

(54) **Famille d'éléments de fixation, calibre de contrôle et procédé de contrôle du choix de longueur d'un élément de fixation**
Set aus Befestigungselementen, Kontrolllehre und Kontrollverfahren der Längenauswahl eines Befestigungselements
Group of attachment elements, testing gauge and method for checking the choice of the length of an attachment element

(30) Priorité: 07.02.2011 FR 1150951
(43) Date de publication de la demande: 08.08.2012
(73) Titulaire: Lisi Aerospace, 75583 Paris Cedex 12 (FR)
(72) Inventeur: Guerin, Nicolas, 95540 MERY SUR OISE (FR); Langlais, Sébastien, 31170 TOURNEFEUILLE (FR)
(74) Mandataire: Chauveau, Ariane

(56) Documents cités:
- EP-A2- 0 947 716
- US-A1- 2009 297 261

## Description

L'invention se rapporte à une famille de dispositifs de fixation selon le préambule de la revendication 1, ainsi qu'à un procédé d'installation d'un tel dispositif avec contrôle du choix de sa longueur. Une telle famille est connue du document FR 2 946 707 A1.

L'invention trouve une application particulière dans le domaine des fixations filetées, utilisées notamment dans l'industrie aéronautique. Un dispositif de fixation filetée classique comprend un élément de fixation, comme une vis, ladite vis comportant une tête, un fût lisse et une portion d'extrémité filetée. Le dispositif de fixation comprend en outre un élément femelle, comme un écrou présentant un taraudage apte à être vissé sur le filetage de la vis. Le dispositif de fixation peut également comporter une douille ou chemise, dans laquelle s'insère la partie lisse du fût.

Un problème qui se pose couramment est la garantie d'avoir installé correctement le dispositif de fixation sur n'importe quel assemblage de structure préalablement percé. Un procédé d'installation de la fixation peut notamment comprendre les étapes suivantes :
1. Choisir la vis de longueur appropriée avant l'installation : la vérification est faite par exemple avec un calibre de mesure d'épaisseur de structure à serrer,
2. Préinstaller la vis dans le perçage, en vérifiant que le fût (ou la douille, si la fixation en comporte une) dépasse des structures à assembler,
3. Vérifier que la vis choisie n'est pas trop longue par rapport à l'épaisseur une fois serrée, la structure assemblée ayant pu s'affaisser lors de l'installation.

Cette étape doit aussi vérifier que la douille ne touche pas le chambrage de l'écrou si la fixation comprend une telle douille. En effet, dans le cas d'une installation en interférence ― c'est-à-dire sans jeu ― avec le fût de la vis, la douille s'allonge un peu lors de cette installation dans la structure.

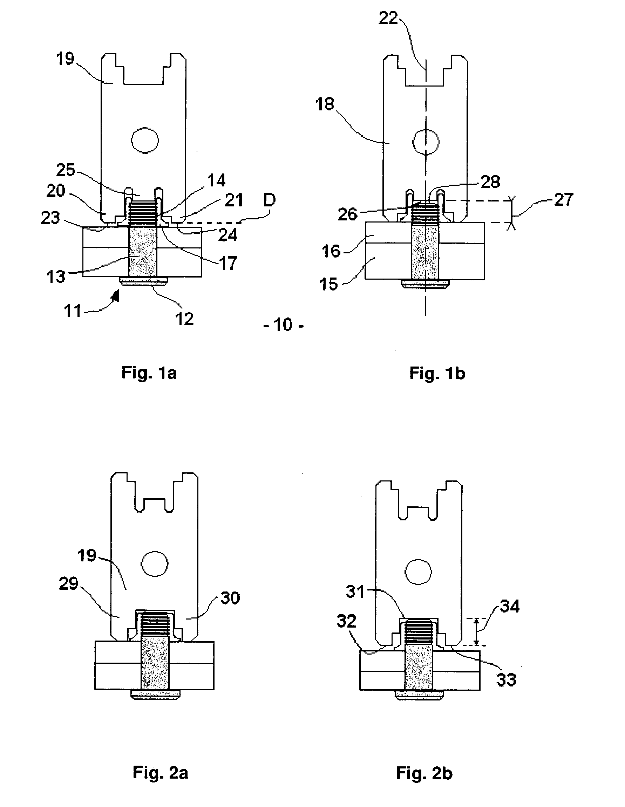

Pour cette dernière étape de vérification, il existe des calibres de contrôle en forme de plaque prenant appui de part et d'autre de la fixation sur une surface extérieure de la structure à assembler. Ces calibres comportent en leur milieu un évidement ou une forme particulière. Un tel calibre est représenté aux figures 1a, 1b, 2a et 2b, qui seront décrites ultérieurement.

Un tel calibre permet notamment de détecter visuellement si l'élément de fixation n'est pas trop long par rapport à l'épaisseur serrée, en vérifiant que la longueur filetée reste inférieure à une longueur maximale tolérée de dépassement de la longueur filetée hors de la structure.

Ce calibre mesure une distance entre une surface frontale de l'extrémité filetée et une surface de la structure. Or lorsque les filets sont réalisés par roulage, l'extrémité filetée s'allonge. Le calibre de contrôle qui s'appuie sur la face frontale d'une extrémité filetée doit alors intégrer l'imprécision de la longueur de fût lisse et l'imprécision de la longueur filetée, qui est peu maîtrisable. L'imprécision totale du système de mesure peut atteindre par exemple +/-0,381 mm.

Dans le cas d'un dispositif de fixation filetée avec douille, le chambrage de l'écrou doit être surdimensionné pour prendre en compte l'imprécision du système de mesure et éviter que la douille ne touche le chambrage lors de son allongement. Une plus grande imprécision de mesure impose donc de concevoir un écrou plus haut, donc plus lourd. Or, un surcroît de poids est à éviter pour des dispositifs destinés à l'industrie aéronautique.

Par ailleurs, le document FR2946707 au nom de la Demanderesse décrit une famille de dispositifs de fixation, comportant une vis tronconique et une douille. Cette famille est telle que, pour un même diamètre avant assemblage en interférence, les douilles présentent un diamètre extérieur identique et un taux de conicité de surface intérieur différent : le taux de conicité de la douille est fonction de l'épaisseur de structure à serrer. Pour un diamètre donné, les vis peuvent présenter jusqu'à quatre taux de conicité pour couvrir les plages d'épaisseur de structure à serrer et présentent ainsi quatre longueurs filetées différentes.

L'utilisation d'un calibre usuel comme décrit précédemment imposerait donc d'avoir quatre calibres différents par diamètre, soit par exemple cinquante-deux calibres pour treize diamètres.

Or, une mise à disposition d'un opérateur d'un trop grand nombre de calibres engendrerait les problèmes suivants :
■ Difficulté pour l'opérateur de sélectionner quel calibre utiliser car la longueur de vis, lorsqu'elle est indiquée, est marquée sur la tête de vis alors que le contrôle se fait du côté écrou ;
■ Risque de se tromper dans le choix du calibre, et donc de rejeter des fixations bien installées, ou pire, d'accepter des fixations mal installées ;
■ Très grand nombre de calibre à concevoir et fabriquer, augmentant d'autant les coûts.

Un objet de l'invention est de résoudre ces problèmes, ainsi que d'améliorer la précision du calibre, de sorte à rejeter le moins possible de fixations bien installées, tout en rejetant systématiquement les fixations mal installées. Une fixation est dite bien installée quand l'élément femelle (écrou ou bague) installé sur la vis (ou le rivet) est au contact de la structure et qu'aucun contact ne se produit entre l'élément femelle et le fût lisse, ou la douille si le dispositif de fixation en comprend une.

A cet effet, l'invention se rapporte à une famille de dispositifs de fixation comprenant au moins deux éléments de fixation, chacun desdits éléments s'étendant suivant un premier axe et comprenant une tête, un fût lisse et une portion d'extrémité façonnée alignés, ledit façonnage de la portion d'extrémité consistant en un filetage ou en des gorges de sertissage une face frontale de la portion d'extrémité façonnée présentant une cavité s'étendant parallèlement au premier axe jusqu'à un fond. Les éléments de fixation présentent un même diamètre moyen extérieur d'extrémité façonnée, ledit diamètre moyen étant mesuré au milieu de l'épaisseur d'un filet ou de la profondeur d'une gorge de sertissage. Les éléments de fixation présentant des capacités de serrage maximal différentes, ladite capacité de serrage maximal correspondant à la longueur du fût lisse selon le premier axe entre la tête et une limite entre ledit fût et la portion d'extrémité façonnée. Les éléments de fixation présentent des capacités de serrage minimal différentes, ladite capacité de serrage minimal correspondant à l'épaisseur minimale d'une structure que l'élément de fixation peut assembler. Les éléments de fixation présentent des plages de serrage identiques, une plage de serrage correspondant à la différence entre la capacité de serrage maximal et la capacité de serrage minimal d'un élément de fixation. La famille est configurée de sorte que la distance selon le premier axe entre le fond de la cavité et la limite entre le fût et la portion d'extrémité façonnée est identique pour tous les éléments de fixation.

Ainsi, il est possible d'utiliser un calibre de contrôle identique pour tous les éléments de la famille, afin de contrôler qu'un élément de fixation a une longueur appropriée à l'épaisseur d'une structure à assembler.

De manière préférentielle, la famille de dispositifs de fixation comprend en outre au moins un élément femelle apte à s'assembler par vissage ou sertissage sur la portion d'extrémité façonnée d'un élément de fixation. L'élément femelle peut être un écrou ou une bague de sertissage.

Selon un mode préférentiel de réalisation de l'invention, la famille de dispositifs de fixation comprend au moins deux éléments de fixation, chaque élément comprenant un fût lisse disposé entre la tête et la portion d'extrémité façonnée, chacun desdits fûts étant tronconique, la famille comprenant en outre au moins deux douilles présentant une surface externe cylindrique et une surface interne tronconique, chacune des surfaces internes étant complémentaire d'une surface d'un fût lisse d'un élément de fixation, les douilles présentant avant mise en interférence un diamètre extérieur identique et un taux de conicité de surface interne différent.

Cette famille de dispositifs de fixation est analogue à la famille décrite dans le document FR2946707.

Préférentiellement, sur la face frontale de la portion d'extrémité façonnée du ou des éléments de fixation, la cavité présente un bord périphérique en forme de ligne courbe continue multilobée. Une telle forme, notamment décrite dans la demande de brevet français n° 1059674 au nom de la demanderesse, permet d'appliquer un couple de serrage important au moyen d'un outil approprié. La cavité peut donc avoir une double fonction de coopération avec un outil de serrage et avec un calibre de contrôle.

L'invention met également en oeuvre un calibre de contrôle comportant un élément mâle qui coopère avec la cavité située sur la portion d'extrémité façonnée d'un élément de fixation d'une famille selon l'invention. Il est possible de contrôler la profondeur de cette cavité de manière beaucoup plus précise que la longueur filetée car cette cavité est usinée après roulage des filets ou des gorges, et sa réalisation est maîtrisable avec une précision très supérieure à celle du roulage des filets ou des gorges.

L'invention se rapporte également à un ensemble pour installation d'un dispositif de fixation, comprenant :
- un calibre de contrôle ayant une forme sensiblement en U, comprenant deux branches sensiblement symétriques par rapport à un deuxième axe et réunies par une partie centrale, les extrémités des deux branches étant coplanaires selon un plan perpendiculaire audit deuxième axe,
- une famille de dispositifs de fixations telle que décrite précédemment.

L'ensemble est caractérisé en ce que :
- la partie centrale du calibre est solidaire d'un picot apte à coulisser dans la cavité de l'élément de fixation, ledit picot étant disposé entre les deux branches du U, sensiblement parallèlement au deuxième axe, une extrémité du picot et le plan passant par les extrémités des branches étant éloignés d'une distance de contrôle mesurée selon ledit deuxième axe,
- la distance de contrôle est supérieure à une distance selon le premier axe entre le fond de la cavité de l'élément de fixation et la limite entre le fût et la portion d'extrémité façonnée.

Un tel ensemble permet une conception plus précise du calibre. Par ailleurs, la cavité ménagée dans l'élément de fixation permet de réduire la masse de ce dernier et de l'élément femelle par rapport aux dispositifs connus, ce qui est particulièrement avantageux dans le domaine aéronautique.

L'invention se rapporte en outre à un procédé de contrôle du choix de la longueur d'un élément de fixation, mettant en oeuvre un ensemble tel que décrit ci-dessus, ledit procédé comportant les étapes suivantes :
- insertion d'un élément de fixation dans un alésage d'un ensemble structural, de manière à ce que la tête et la portion d'extrémité façonnée dudit élément soient disposées de part et d'autre dudit ensemble structural,
- assemblage de l'élément femelle avec la portion d'extrémité façonnée et serrage de l'élément femelle contre une surface de l'ensemble structural,
- insertion du picot du calibre de contrôle dans la cavité de la portion d'extrémité façonnée, afin de mettre en contact l'extrémité du picot et un fond de la cavité,
- si l'extrémité du picot est en contact avec le fond de la cavité sans que les extrémités des deux branches du calibre ne puissent être au contact de la surface de l'ensemble structural, alors l'élément de fixation est trop long.

L'invention sera mieux comprise à la lecture de la description qui suit et à l'examen des figures qui l'accompagnent. Celles-ci sont données à titre indicatif et nullement limitatif de l'invention. Les figures montrent :
- Figures 1a, 1b : des vues en coupe d'un ensemble selon l'état de la technique pour un premier contrôle du choix de longueur d'un élément de fixation installé dans une structure;
- Figures 2a, 2b : des vues en coupe d'un ensemble selon l'état de la technique pour un deuxième contrôle du choix de longueur d'un élément de fixation installé dans une structure;
- Figure 3 : une vue latérale d'un autre élément de fixation selon l'état de la technique;
- Figures 4a, 4b : des vues en coupe d'éléments de fixation d'une famille d'éléments de fixation selon un mode de réalisation de l'invention ;
- Figure 5 : une vue en coupe d'éléments d'un ensemble pour le contrôle du choix de la longueur d'un élément de fixation selon un mode de réalisation de l'invention ;
- Figures 6a, 6b : des vues en coupe d'éléments d'un ensemble pour le contrôle du choix de la longueur d'un élément de fixation installé dans une structure en pente, selon un mode de réalisation de l'invention ;
- Figures 7a, 7b : des vues en coupe d'éléments d'un ensemble pour le contrôle du choix de la longueur d'un élément de fixation selon un mode de réalisation de l'invention.

Les figures 1a et 1b montrent des vues en coupe d'un ensemble selon l'état de la technique pour le contrôle du choix de la longueur d'un élément de fixation. L'ensemble 10 comprend un élément 11 de fixation sensiblement cylindrique ; ledit élément 11 comportant une tête 12, un fût 13 lisse et une portion d'extrémité façonnée 14, ledit façonnage consistant ici en des gorges de sertissage. L'élément 11 prend place dans un alésage d'un ensemble structural composé de deux éléments 15, 16 de structure. Ledit ensemble structural fait par exemple partie d'un aéronef.

La tête 12 se trouve au contact d'un premier élément 15 et la portion d'extrémité 14 est proche du second élément 16 de structure. Une bague 17 de sertissage est ensuite assemblée à la portion d'extrémité façonnée 14 pour solidariser l'élément 11 de fixation aux éléments 15, 16 de structure.

Un calibre 18 de contrôle est ensuite utilisé afin de vérifier que l'élément de fixation n'est ni trop court ni trop long par rapport à l'épaisseur de structure assemblée. A cet effet, le calibre 18 comporte une première partie sensiblement en U, comprenant deux branches 20, 21 sensiblement symétriques par rapport à un axe 22. Une droite de régression D passant par les extrémités 23, 24 des deux branches est perpendiculaire à l'axe 22. Cette première partie contrôle que l'élément de fixation n'est pas trop court.

La partie en U du calibre 18 comprend en outre un picot 25 central disposé entre les deux branches 20, 21, sensiblement coaxialement à l'axe 22. Un plan passant par une extrémité 26 du picot et un plan passant par les extrémités 23, 24 des branches 20, 21 sont éloignés d'une distance 27 mesurée selon l'axe 22, choisie comme étant une hauteur minimale de dépassement de l'élément de fixation par rapport à une épaisseur de structure assemblée théorique. Le picot 25 est apte à coulisser à l'intérieur de la bague 17, afin d'entrer en contact avec une face 28 frontale de la portion d'extrémité 14.

Sur la figure 1a, on voit que l'extrémité 26 du picot 25 est au contact de la face 28 de l'élément 11, tandis que les extrémités 23, 24 des branches du calibre 18 ne touchent pas l'élément 16 de structure. La portion d'extrémité 14 dépasse donc de l'élément 16 d'une distance supérieure à la distance 27. L'élément 11 de fixation est donc assemblé correctement aux éléments 15, 16 de structure.

Sur la figure 1b, au contraire, les extrémités 23, 24 des branches du calibre 18 touchent l'élément 16 de structure tandis que l'extrémité 26 du picot 25 n'est pas au contact de la face 28 de l'élément 11. L'élément de fixation 11 ne dépasse pas suffisamment de l'élément de structure 16. L'élément 11 de fixation n'est donc pas assemblé correctement aux éléments 15, 16 de structure puisqu'il est trop court. Il convient de démonter la fixation et de procéder à l'installation d'un nouvel élément de fixation, plus long.

Une autre partie 19 du calibre 18 est utilisée pour vérifier que l'élément 11 n'est pas trop long par rapport à l'épaisseur de structure assemblée. Cette partie 19 comprend une partie sensiblement en U, comprenant deux branches 29, 30 sensiblement symétriques par rapport à l'axe 22. Une partie plane médiane 31 relie les deux branches 29, 30. Un plan passant par la partie plane médiane 31 et un plan passant par les extrémités 32, 33 des branches 29, 30 sont éloignés d'une distance 34 mesurée selon l'axe 22, choisie comme étant une hauteur maximale de dépassement de la fixation par rapport à une épaisseur de structure assemblée théorique.

Sur la figure 2a, on voit que les extrémités 32, 33 des branches 29, 30 du calibre 18 touchent l'élément 16 de structure tandis que la partie plane médiane 31 ne touche pas l'extrémité façonnée 14. La longueur de l'élément de fixation est correcte.

Sur la figure 2b au contraire, on voit que les extrémités 32, 33 des branches 29, 30 du calibre 18 ne touchent pas l'élément 16 de structure tandis que la partie plane médiane 31 touche l'extrémité façonnée 14 de l'élément de fixation. L'élément 11 de fixation est trop long et doit être démonté pour installer un élément plus court.

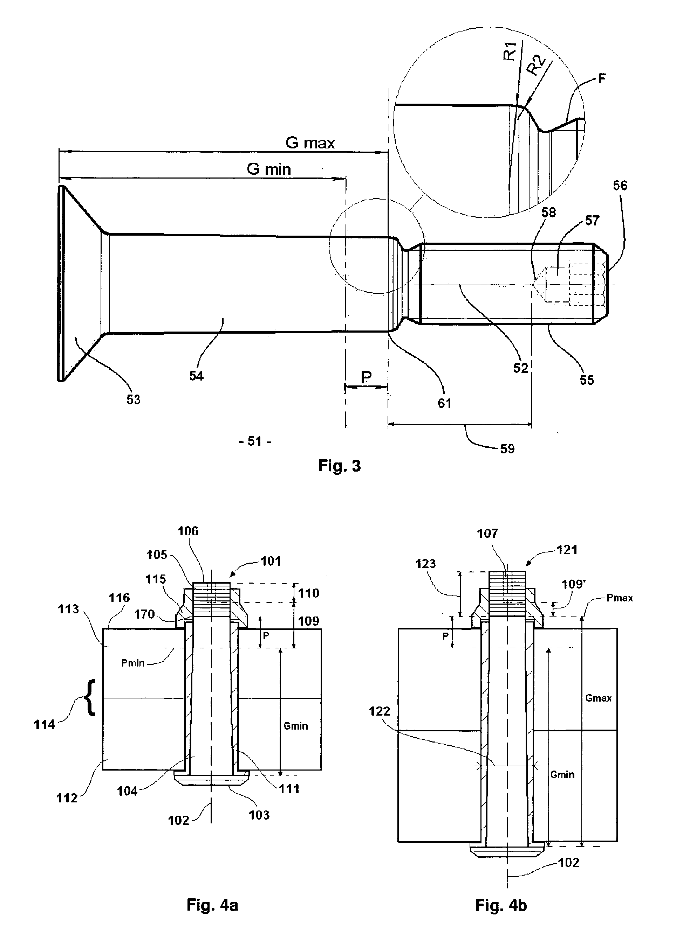

La figure 3 montre une vue latérale d'un autre élément de fixation 51 selon l'état de la technique s'étendant selon un axe 52. L'élément 51 comporte une tête 53 fraisée, un fût 54 lisse tronconique et une portion d'extrémité 55 filetée, alignés selon l'axe 52. La face frontale 56 de la portion d'extrémité filetée 55 présente une cavité 57, disposée parallèlement à l'axe 52 et de forme sensiblement cylindrique. Cette cavité 57 permet de maintenir l'élément 51 fixe en rotation au moyen d'un outil approprié, pendant qu'un écrou est installé sur la portion d'extrémité filetée 55.

L'élément 51 de fixation présente une capacité maximale de serrage Gmax, qui correspond à l'épaisseur maximale d'une structure que ledit élément de fixation peut assembler. Cette capacité maximale de serrage est représentée par la longueur comprise entre l'extrémité de l'élément 51 où se trouve la tête 53, jusqu'à la limite 61 entre le fût 54 et la portion 55 d'extrémité filetée. La longueur Gmax est mesurée selon l'axe 52. Si la tête 53 était une tête protubérante et non une tête fraisée, la longueur de ladite tête ne serait pas prise en compte dans la mesure de Gmax.

La zone de jonction entre le fût lisse 54 et la portion 55 d'extrémité filetée est visible en détail magnifié sur la figure 3. La limite 61 coïncide avec le début d'une zone de transition, qui raccorde le fût lisse 54 au premier filet F de la portion d'extrémité filetée 55 par deux rayons R1 et R2. L'élément 51 de fixation possède une plage de serrage P, définie par le fabricant. La capacité minimale de serrage Gmin, qui correspond à l'épaisseur minimale qu'une fixation peut assembler, est déterminée en retranchant la plage de serrage P à la capacité maximale de serrage Gmax.

Le fond 58 de la cavité 57 est situé à une distance 59, mesurée selon l'axe 52, de la limite 61. La cavité présente une profondeur 60 mesurée entre le fond 58 de cavité 57 et la face frontale 56. Les profondeurs 60 des cavités 57 sont identiques pour tous les éléments de fixation d'un même type, quelle que soit le diamètre extérieur ou la longueur de l'élément 51.

Les figures 4a et 4b montrent des vues d'éléments de fixation d'une famille d'éléments de fixation selon un mode de réalisation de l'invention, installés dans un ensemble structural.

Plus particulièrement, les figures 4a et 4b montrent respectivement deux éléments 101, 121 de fixation appartenant à une même famille de dispositifs de fixation. Chaque élément 101, 121 s'étend selon un axe 102 et comporte une tête 103 protubérante, un fût 104 lisse et une portion d'extrémité 105 façonnée, alignés selon l'axe 102. Dans l'exemple représenté à la figure 4a, le façonnage de la portion d'extrémité 105 est un filetage. Le diamètre moyen extérieur de la portion 105 est identique pour tous les éléments de la famille, ledit diamètre moyen étant mesuré au milieu de l'épaisseur d'un filet. Par ailleurs, le fût 104 lisse a une surface externe de forme tronconique. La face frontale 106 de la portion d'extrémité façonnée 105 présente un orifice débouchant sur une cavité 107. Ladite cavité 107, de forme sensiblement cylindrique, est disposée parallèlement à l'axe 102, à l'intérieur de la portion d'extrémité façonnée 105.

L'élément 101 de fixation présente une capacité maximale de serrage Gmax. Cette valeur correspond à la longueur du fût 104 lisse, mesurée selon l'axe 102, depuis la tête 103 jusqu'à une limite 170 avec la portion 105 d'extrémité filetée. La tête 103 étant protubérante, elle n'est pas prise en compte dans la mesure de Gmax.

L'élément 101 de fixation présente également une capacité minimale de serrage Gmin et une plage de serrage P. La capacité minimale de serrage correspond à l'épaisseur minimale d'une structure que l'élément 101 de fixation peut assembler. Si la structure a une épaisseur inférieure à Gmin après serrage d'un élément femelle sur la portion 105 filetée, alors l'élément 101 est trop long pour ladite structure.

La valeur de Gmin est déterminée par le fabricant des éléments (101, 121) de fixation, en fonction des caractéristiques mécaniques desdits éléments. La plage de serrage P correspond à la différence entre Gmax et Gmin.

On dénomme plan de serrage maximal Pmax un plan perpendiculaire à l'axe 102 et passant par la limite 170 entre le fût 104 lisse et l'extrémité 105 filetée. On dénomme plan de serrage minimal Pmin un plan parallèle au plan de serrage maximal, situé entre ledit plan et la tête 103, les deux plans Pmax et Pmin étant écartés d'une distance P mesurée selon l'axe 102 et correspondant à la plage de serrage.

Le fond 108 de la cavité 107 est situé à une distance 109' du plan de serrage maximal Pmax, et à une distance 109 du plan de serrage minimal Pmin. La différence entre les distance 109' et 109 est la plage de serrage P de l'élément 101 de fixation. La cavité 107 présente une profondeur 110 mesurée entre le fond 108 et la face frontale 106.

L'élément 101 fait partie d'un dispositif de fixation qui comprend en outre une douille 111. La douille 111 possède une surface externe cylindrique et une surface interne tronconique, complémentaire de la surface externe du fût 104. La douille 111 est destinée à prendre place dans un alésage ménagé dans des éléments 112, 113 de structure, que l'on souhaite assembler. Il s'agit notamment d'éléments de structure d'un aéronef.

L'élément 101 vient s'insérer dans la douille 111, de manière à ce que la tête 103 et la portion d'extrémité 105 filetée se trouvent de part et d'autre de l'ensemble structural 114 formé par les éléments 112, 113 de structure. Un écrou 115 est ensuite vissé à l'extrémité 105 filetée et serré contre une surface 116 de l'ensemble 114.

Sur les figures 4a et 4b, les éléments 101, 121 sont représentés en vue latérale; la douille 111, l'écrou 115 et l'ensemble structural 114 sont représentés en coupe.

Afin de répondre aux exigences de tenue mécanique requises en aéronautique, il convient de vérifier, suite à l'installation de l'écrou, que ce dernier est convenablement installé. Il faut également vérifier que la fixation n'est pas trop longue par rapport à l'épaisseur serrée, ou en d'autres termes, vérifier que l'épaisseur serrée ne se trouve pas en-deçà de la plage de serrage minimale Gmin de l'élément de fixation choisi. En effet, une fixation trop longue par rapport à la structure assemblée n'est pas correctement installée, soit parce que l'écrou 115 ne touche pas la surface 116 de l'ensemble 114, soit parce que l'extrémité de la douille 111 tape dans le chambrage de l'écrou.

La figure 4b montre un élément 121 de fixation appartenant à une même famille que l'élément 101. La description ci-dessus de l'élément 101 est applicable à l'élément 121.

Les éléments 101, 121 présentent des longueurs différentes entre la tête 103 et la face 106 frontale de l'extrémité filetée, ainsi que des longueurs Gmax et Gmin différentes. De cette manière, ils peuvent assembler des ensembles 114 d'épaisseurs différentes.

Cependant, la plage de serrage P, correspondant à (Gmax ― Gmin), est la même pour tous les éléments (101, 121) d'une même famille.

Par ailleurs, les douilles 111 des éléments 101, 121 présentent un diamètre 122 extérieur identique et un taux de conicité de surface intérieur différent. Le taux de conicité de la douille 111 est fonction de l'épaisseur de structure 114 à serrer. Par « taux de conicité », on entend notamment un angle formé par une surface externe et une surface interne des douilles 111, dans le plan de coupe des figures 4a et 4b.

Les éléments 101, 121 présentent également des longueurs 123 filetées différentes en fonction de la distance entre la tête 103 et la face 106 frontale. Pour un diamètre 122 donné, les éléments de type 101, 121 appartenant à une même famille peuvent présenter jusqu'à quatre taux de conicité différents pour couvrir les plages d'épaisseur de structure 114 à serrer. La famille d'éléments présente ainsi quatre longueurs 123 filetées différentes.

En conséquence, pour une fixation conforme aux exigences requises, les éléments 101, 121 présentent une longueur de dépassement différente de la face 106, par rapport à la surface 116.

Cependant, comme indiqué précédemment, il est préférable de pouvoir utiliser un seul et même calibre de contrôle pour vérifier que le choix de la longueur de l'élément de fixation reste correct après installation, pour la totalité des éléments d'une même famille.

Ainsi, afin de n'utiliser qu'un seul calibre de contrôle pour toute une famille d'éléments (101, 121) de même diamètre extérieur moyen d'extrémités 105 filetées, chaque élément 101, 121 est muni d'une cavité 107 dont la profondeur 110 est calculée de sorte que le fond 108 est situé à une distance 109 constante du plan de serrage minimal Pmin de l'élément de fixation, quelle que soit la longueur dudit élément.

Comme la plage de serrage P d'une fixation est identique pour tous les éléments (101, 121) d'une même famille, le fond 108 est aussi situé à une distance 109' du plan de serrage maximal Pmax, identique pour tous les éléments de la famille. La distance 109' est égale à la distance 109 moins la plage de serrage P.

Ainsi, des éléments (101, 121) d'une même famille possédant des hauteurs 123 filetées différentes ont des cavités 107 de profondeur 110 différentes. Les distances depuis le dessous de la tête 103 jusqu'au fond 108 de perçage (distance Gmin + 109) peuvent être vérifiées très précisément au moyen d'outils de contrôle usuels, tels qu'un comparateur digital à touche sphérique.

L'invention s'applique également à des éléments de fixation ayant un fût 104 de forme cylindrique, de tels éléments pouvant ou non être associés à une douille 111, comme par exemple des rivets ou des rivets aveugles.

Selon une variante de l'invention, la cavité pourrait être un creux disposé parallèlement à l'axe 102 sur la surface extérieure latérale de la portion 105 d'extrémité façonnée. La cavité s'étend également depuis la face frontale 106 sur une distance 110 jusqu'à un fond 108, à la différence que ladite distance 110 est choisie de manière à ce que le fond 108 se trouve au-dessus de l'écrou ou de la bague 115 serré ou sertie sur l'extrémité façonnée 105.

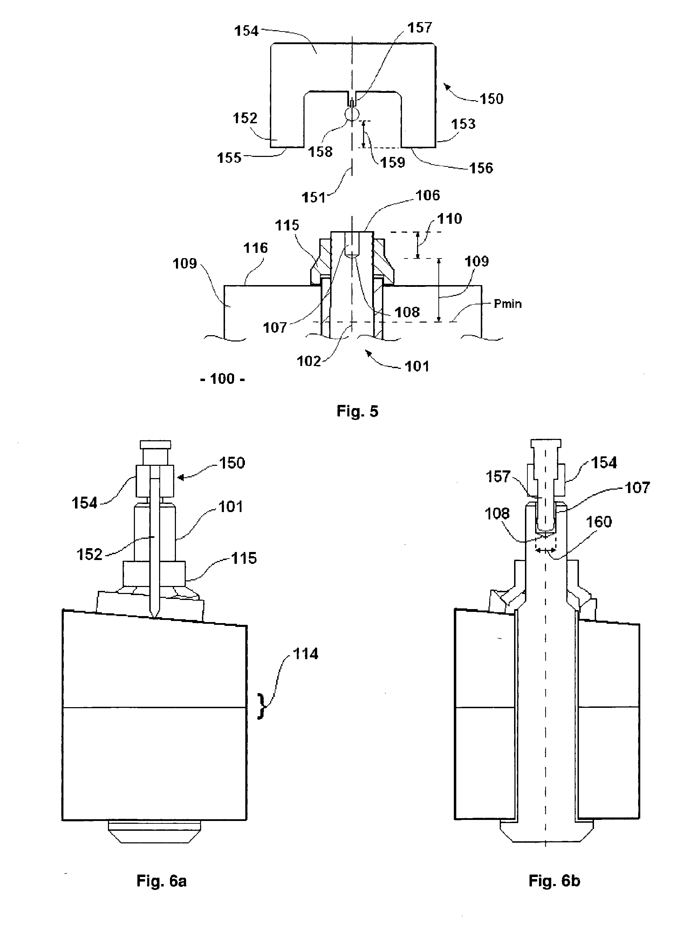

La figure 5 montre une vue d'un ensemble 100 comprenant un élément 101 de fixation tel que précédemment décrit et un calibre 150 de contrôle. L'élément 101 fait partie d'un dispositif de fixation comprenant également un écrou 115 et une douille 111, ledit dispositif étant représenté en coupe. Le calibre 150 est représenté en vue latérale.

Le dispositif de fixation comprenant l'élément 101 est installé dans un ensemble 114 structural. Le calibre 150 a pour fonction de contrôler le choix de la longueur de l'élément 101 après vissage de l'écrou 115, notamment en fonction de l'affaissement de l'ensemble 114 durant l'installation du dispositif de fixation.

L'affaissement de l'ensemble 114 est contrôlé par rapport à la distance 109 séparant le fond 108 de la cavité 107 et le plan de serrage minimal Pmin de l'élément 101.

Le calibre 150 est préférentiellement symétrique par rapport à un axe 151 ou par rapport à un plan passant par ledit axe. Le calibre 150 a une forme sensiblement en U, comprenant deux branches 152, 153 sensiblement parallèles à l'axe 151 et réunies par une partie 154 centrale. Les extrémités 155, 156 des deux branches sont coplanaires selon un plan perpendiculaire à l'axe 151.

La partie 154 centrale du calibre 150 est solidaire d'un picot 157, disposé entre les deux branches 152, 153 de sorte que ledit picot 157 passe par un plan médian contenant les deux branches. Le picot 157 s'étend sensiblement coaxialement à l'axe 151. Le picot 157 est dimensionné de manière à pouvoir coulisser dans la cavité 107 ménagée dans l'élément 101 de fixation, une extrémité 158 du picot pouvant entrer en contact avec un fond 108 de ladite cavité.

L'extrémité 158 du picot 157 peut avoir des formes différentes, de type cône, pointe, bille ou plat. De manière préférentielle, le fond 108 de la cavité 107 a une forme conique et l'extrémité 158 du picot a la forme d'une bille, ladite forme de bille étant bien adaptée pour entrer en contact avec un cône de perçage.

Le plan perpendiculaire à l'axe 151 passant par l'extrémité 158 du picot et le plan perpendiculaire à l'axe 151 passant par les extrémités 155, 156 des branches 152, 153 sont éloignés d'une distance de contrôle 159 mesurée selon l'axe 151. La distance de contrôle 159 correspond à un maximum autorisé d'une distance 109 entre le fond 108 de la cavité 107 de l'élément 101 et le plan de serrage minimal Pmin des éléments 101, 121.

Le calibre est symétrique par rapport à l'axe 151 lorsque la cavité est un creux pratiqué à l'intérieur de la portion d'extrémité façonnée 105, comme dans l'exemple représenté à la figure 5. Selon une variante, le picot 157 pourrait être décalé vers une branche 152 ou 153 si la cavité était un creux pratiqué sur une surface latérale externe de la portion d'extrémité façonnée 105. Selon une autre variante, le calibre pourrait ne comporter qu'une seule branche s'il était utilisé uniquement pour contrôler des dispositifs de fixations installés dans des éléments plans, présentant des surfaces extérieures parallèles entre elles.

La distance de contrôle 159 peut être établie de manière très précise lors de la fabrication du calibre 150. Par exemple, l'extrémité 158 en forme de bille est montée sur la partie 154 centrale du calibre, puis les branches 152, 153 sont rectifiées et ajustées, notamment par meulage, afin que les extrémités 155, 156 soient à la distance 159 souhaitée de l'extrémité 158 du picot 157.

La figure 6a présente un autre mode de réalisation de l'invention, dans le cas où l'ensemble structural 114 présente des surfaces non parallèles entre elles. Plus précisément, la figure 6a est une vue latérale d'un calibre 150 utilisé pour vérifier l'installation d'un dispositif de fixation tel que décrit précédemment, comprenant une cavité 107 en forme de perçage cylindrique dans un élément 101 de fixation. L'élément 101 est installé dans un ensemble structural 114 présentant des surfaces non parallèles entre elles Plus précisément, la surface 116 en contact avec l'élément femelle 115 n'est pas perpendiculaire à l'axe de l'élément 101. La figure 6b est une vue en coupe correspondant à la vue 6a. Dans les deux figures, l'élément femelle 115 est un écrou rotulé.

Pour s'assurer que le picot central 157 est correctement guidé dans la cavité 107, le picot doit avoir un diamètre 160 identique au perçage cylindrique de la cavité 107 - au jeu près, par exemple entre 0,01 mm et 0,03 mm - sur une hauteur de guidage suffisante. Cette hauteur est par exemple égale à la plus grande profondeur 110 de la cavité 107 de l'élément de fixation (101, 121) le plus long de la famille. De cette manière, le picot central ne possède aucun jeu suffisant lui permettant de s'incliner dans la cavité 107. Une telle inclinaison pourrait entraîner des erreurs de mesure.

D'une manière générale, le picot central 157 doit avoir une forme complémentaire à celle de la cavité 107 de sorte à être guidé dans celle-ci avec un jeu minimum. Ainsi, une cavité 107 en forme de rainure pratiquée sur une surface extérieure latérale de la portion d'extrémité façonnée 105 nécessitera un picot central 157 de forme complémentaire à la rainure.

Un procédé d'installation d'un dispositif de fixation, mettant en oeuvre un ensemble tel que l'ensemble 100, comporte par exemple les étapes suivantes :
- Etape 1 : insertion d'un élément (101, 121) de fixation dans un alésage d'un ensemble 114 structural, de manière à ce que la tête 103 et l'extrémité 105 filetée dudit élément soient disposées de part et d'autre dudit ensemble 114 structural. L'opérateur vérifie visuellement que la douille 111, ou le fut lisse 104 si la fixation ne possède pas de douille, dépasse de la structure 114. De cette manière, il vérifie visuellement que l'épaisseur de structure à assembler n'est pas supérieure à la capacité de serrage maximale Gmax de l'élément de fixation (101, 121) choisi. Si la douille 111 ou le fût lisse 104 ne dépasse pas de l'alésage, l'élément de fixation est trop court et l'opérateur doit en choisir un autre plus long.
- Etape 2 : assemblage de l'écrou 115 avec la portion d'extrémité 105 filetée et serrage de l'écrou contre la surface 116 de l'ensemble 114 structural. L'invention s'applique également à des éléments de fixation ayant des gorges de sertissage sur l'extrémité 105, l'écrou 115 étant alors remplacé par une bague de sertissage.
- Etape 3 : insertion du picot 157 du calibre 150 de contrôle dans la cavité 107 de la portion d'extrémité 105 filetée. Cette étape permet de vérifier que l'épaisseur de structure à assembler une fois serrée ne s'est pas affaissée et ne se trouve pas en dessous de la capacité minimale de serrage Gmin de l'élément de fixation 101, 121. Cette étape permet donc de vérifier que l'opérateur n'a pas choisi un élément de fixation trop long.

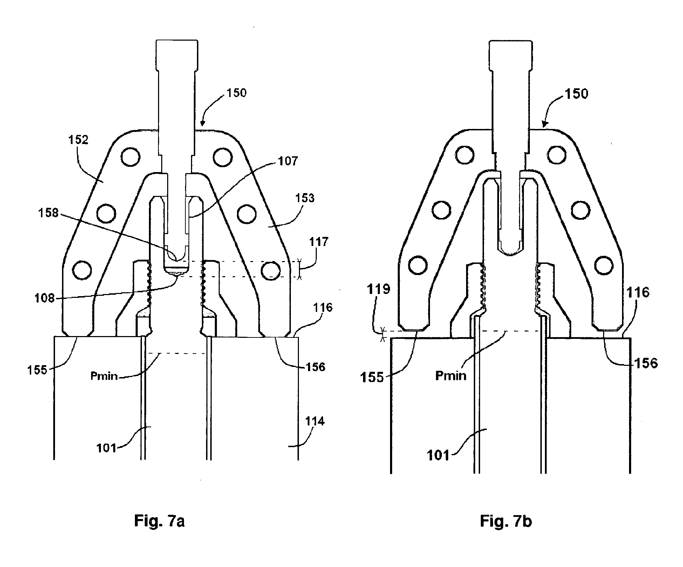

La figure 7a montre un exemple d'installation de l'élément 101 dans lequel, à l'étape 3, les extrémités 155, 156 des branches 152, 153 du calibre 150 entrent en contact avec la surface 116 alors qu'un jeu 117, positif ou nul, existe entre l'extrémité 158 du picot et le fond 108.

Dans ce cas, l'épaisseur totale de l'ensemble 114 est supérieure à la capacité minimale de serrage Gmin de l'élément 101. En d'autres termes, le plan Pmin de serrage minimal passe par l'ensemble 114. L'élément 101 n'est pas trop long et est convenablement installé.

Au contraire, la figure 7b montre un exemple d'installation de l'élément 101 dans lequel, à l'étape 3, l'extrémité 158 du picot est en contact avec le fond 108 de la cavité sans que les deux extrémités 155, 156 des branches du calibre 150 ne soient au contact de la surface 116. L'épaisseur totale de l'ensemble 114 est inférieure à la capacité minimale de serrage Gmin de l'élément. La différence de longueur entre l'épaisseur totale de l'ensemble 114 et la capacité minimale de serrage Gmin est identifiée visuellement par le jeu 119 entre le calibre 150 et l'ensemble structural 114. En effet, comme le picot 157 bute dans le fond 108 de la cavité 107, les extrémités 155, 156 des branches du calibre passent par le plan Pmin. Le jeu 119 étant positif, l'élément 101 est trop long, il convient de le démonter et d'en installer un plus court.

Si seule une des deux extrémités du calibre 150 touche la structure, alors le calibre est mal positionné : cela peut arriver dans le cas où les structures à assembler présentent une pente, comme sur les figures 6a et 6b. L'opérateur doit alors tourner le calibre 150 autour de l'axe 151 du picot central 157 de sorte que soit les extrémités 155, 156 des deux branches touchent la structure 114, soit qu'aucune ne la touche. Les deux cas ne peuvent arriver simultanément puisque la fixation est soit bien installée, soit mal installée.

Il est avantageux de prévoir, sur le calibre 150, des inscriptions de type TOUCH-GO ou NO TOUCH-NO GO au niveau des branches 152, 153, qui donnent à l'opérateur une indication du résultat à déterminer à l'étape 3.

## Revendications

1. Famille de dispositifs de fixation comprenant au moins deux éléments (101, 121) de fixation, chacun desdits éléments s'étendant suivant un premier axe (102) et comprenant une tête (103), un fût lisse (104) et une portion d'extrémité façonnée (105) alignés, ledit façonnage de la portion d'extrémité consistant en un filetage ou en des gorges de sertissage, les éléments de fixation présentant un même diamètre moyen extérieur d'extrémité façonnée, ladite famille étant **caractérisée en ce que** :
- une face frontale (106) de la portion d'extrémité façonnée (105) de chacun des éléments de fixation présente une cavité (107) s'étendant parallèlement au premier axe (102) jusqu'à un fond (108),
- les éléments de fixation présentent des capacités de serrage maximal (Gmax) différentes, ladite capacité de serrage maximal correspondant à la longueur du fût lisse (104) selon le premier axe (102) entre la tête (103) et la limite (170) entre ledit fût et la portion d'extrémité façonnée (105),
- les éléments de fixation présentent des capacités de serrage minimal (Gmin) différentes, ladite capacité de serrage minimal correspondant à l'épaisseur minimale d'une structure que l'élément de fixation peut assembler,
- les éléments de fixation présentent des plages de serrage (P) identiques, une plage de serrage correspondant à la différence entre la capacité de serrage maximal (Gmax) et la capacité de serrage minimal (Gmin) d'un élément de fixation,
la famille étant configurée de sorte que la distance (109') selon le premier axe (102) entre le fond (108) de la cavité (107) et la limite (170) entre le fût et la portion d'extrémité façonnée est identique pour tous les éléments de fixation (101, 121).

2. Famille de dispositifs de fixation selon la revendication 1, comprenant en outre au moins un élément (115) femelle apte à s'assembler par vissage ou sertissage sur une extrémité usinée d'un élément de fixation.

3. Famille de dispositifs de fixation selon la revendication 1 ou la revendication 2, comprenant en outre au moins une douille (111) destinée à s'emboîter autour du fût lisse (104) d'un élément de fixation.

4. Famille de dispositifs de fixation selon l'une des revendications précédentes, telle que le fût lisse (104) est tronconique.

5. Famille de dispositifs de fixation selon la revendication 4, comprenant en outre au moins deux douilles (111) présentant une surface externe cylindrique et une surface interne tronconique, chacune des surfaces internes étant complémentaire d'une surface d'un fût lisse (104) d'un élément de fixation, les douilles présentant avant mise en interférence un diamètre extérieur identique et un taux de conicité de surface interne différent.

6. Famille de dispositifs de fixation selon l'une des revendications précédentes, telle que la cavité (107) est un perçage cylindrique pratiqué à l'intérieur de la portion d'extrémité façonnée (105).

7. Famille de dispositifs de fixation selon la revendication 6, telle que la cavité (107) présente un bord périphérique en forme de ligne courbe continue multilobée.

8. Famille de dispositifs de fixation selon l'une des revendications 1 à 5, telle que la cavité (107) est un creux pratiqué en surface extérieure sur la ou les portions d'extrémités façonnée (105).

9. Ensemble (100) pour installation d'un dispositif de fixation, comprenant :
- un calibre (150) de contrôle ayant une forme sensiblement en U, comprenant deux branches (152, 153) sensiblement symétriques par rapport à un deuxième axe (151) et réunies par une partie (154) centrale, les extrémités (155, 156) des deux branches étant coplanaires selon un plan perpendiculaire audit deuxième axe,
- une famille de dispositifs de fixations selon l'une des revendications précédentes,
l'ensemble étant **caractérisé en ce que** :
- la partie centrale du calibre est solidaire d'un picot (157) apte à coulisser dans la cavité (107) d'un élément de fixation (101, 121), ledit picot étant disposé entre les deux branches (152, 153) du U, sensiblement parallèlement au deuxième axe (151), une extrémité (158) du picot et le plan passant par les extrémités (155, 156) des branches étant éloignés d'une distance de contrôle (159) mesurée selon ledit deuxième axe,
- la distance de contrôle (159) est supérieure à la distance (109') selon le premier axe (102) entre le fond (108) de la cavité (107) et la limite (170) entre le fût et la portion d'extrémité façonnée.

10. Ensemble selon la revendication 9, tel que l'extrémité (158) du picot (157) a la forme d'une bille.

11. Ensemble selon la revendication 10, tel que le picot (157) a une forme (160) complémentaire à celle de cavité (107) sur une hauteur de guidage s'étendant sur au moins une partie de la longueur du picot.

12. Ensemble selon la revendication 11, tel que le picot (157) présente une hauteur de guidage égale à la plus grande profondeur (110) de la cavité (107) de l'élément de fixation (101, 121) le plus long de la famille.

13. Procédé de contrôle du choix de longueur d'un élément de fixation mettant en oeuvre un ensemble (100) selon l'une des revendications 9 à 12, comprenant une famille de dispositifs de fixations selon l'une des revendications 2 à 8, ledit procédé comportant les étapes suivantes :
- insertion d'un élément de fixation (101, 121) dans un alésage d'un ensemble structural (114) de manière à ce que la tête (103) et la portion d'extrémité façonnée (105) dudit élément soient disposées de part et d'autre dudit ensemble structural,
- assemblage de l'élément femelle (115) sur la portion d'extrémité façonnée (105) et serrage de l'élément femelle contre une surface (116) de l'ensemble structural,
- insertion du picot (157) du calibre de contrôle (150) dans la cavité (107) de la portion d'extrémité façonnée,
- si l'extrémité du picot est en contact avec le fond (108) de la cavité sans que les extrémités (155, 156) des branches du calibre ne puissent être au contact de la surface (116) de l'ensemble structural, alors l'élément de fixation est trop long.

## Patentansprüche

1. Befestigungsvorrichtungsfamilie mit wenigstens zwei Befestigungselemente (101, 121), wobei die genannten Elemente sich jeweils in Richtung einer ersten Achse (102) erstrecken, und einen Kopf (103), einen glatten Körper (104) und einen geformten Endeabschnitts (105) umfassen, wobei die genannte Formung des Endeabschnitts aus einem Gewinde oder Crimpnuten besteht, wobei die Befestigungselemente jeweils geformte Enden mit gleichen durchschnittlichen Außendurchmessern aufweisen, wobei die genannte Familie **dadurch gekennzeichnet** wird, dass:
- eine Vorderseite (106) des geformten Endeabschnitts (105) jedes Befestigungselements einen sich parallel zur ersten Achse (102) bis zu einem Grund (108) erstreckenden Hohlraum (107) aufweist,
- die Befestigungselemente jeweils verschiedene maximale Klemmfähigkeiten (Gmax) aufweisen, wobei die genannte Klemmfähigkeit der Länge des glatten Körpers (104) in Richtung der ersten Achse (102) zwischen dem Kopf (103) und der Grenze (170) zwischen dem genannten Körper und dem geformten Endeabschnitt (105) entspricht,
- die Befestigungselemente jeweils verschiedene minimale Klemmfähigkeiten (Gmin) aufweisen, wobei die genannte Klemmfähigkeit der minimalen Dicke einer Struktur entspricht, die durch das Befestigungselement zusammengesetzt werden kann,
- die Befestigungselemente jeweils identische Klemmbereiche (P) aufweisen, wobei ein Klemmbereich dem Unterschied zwischen der maximalen Klemmfähigkeit (Gmax) und der minimalen Klemmfähigkeit (Gmin) eines Befestigungselementes entspricht,
wobei die Familie so ausgebildet ist, dass die Distanz (109') in Richtung der ersten Achse (102) zwischen dem Grund (108) des Hohlraums (107) und der Grenze (170) zwischen dem Körper und dem geformten Endeabschnitt für alle Befestigungselemente (101, 121) identisch ist.

2. Befestigungsvorrichtungsfamilie nach Anspruch 1, umfassend außerdem wenigstens ein Hohlelement (115), das dafür geeignet ist, auf ein bearbeitetes Ende eines Befestigungselementes durch eine Schraub- oder Crimpverbindung zusammengesetzt zu werden.

3. Befestigungsvorrichtungsfamilie nach Anspruch 1 oder Anspruch 2, umfassend außerdem mindestens eine Büchse (111), die um den glatten Körper (104) eines Befestigungselements gesteckt werden soll.

4. Befestigungsvorrichtungsfamilie nach einem der vorausgegangenen Ansprüche, bei der der glatte Körper (104) kegelstumpfartig ist.

5. Befestigungsvorrichtungsfamilie nach Anspruch 4, umfassend außerdem mindestens zwei Büchsen (111) jeweils mit einer zylinderförmigen Außenfläche und einer kegelstumpfartigen Innenfläche, wobei jede Innenfläche komplementär einer Fläche eines glatten Körpers (104) eines Befestigungselements ist, wobei vor der Zusammenwirkung die Büchsen jeweils identische Außendurchmesser und verschiedene Innenflächenkonizitätsgrade aufweisen.

6. Befestigungsvorrichtungsfamilie nach einem der vorausgegangenen Ansprüche, wobei der Hohlraum (107) eine zylindrische Bohrung im geformten Endeabschnitt ist.

7. Befestigungsvorrichtungsfamilie nach Anspruch 6, wobei der Hohlraum (107) einen umlaufenden Rand aufweist, der als eine viellappige kontinuierliche Bogenlinie ausgebildet ist.

8. Befestigungsvorrichtungsfamilie nach einem der Ansprüche 1 bis 5, wobei der Hohlraum (107) eine Ausnehmung in der Außenfläche an dem oder den geformten Endeabschnitt(en) (105) ist.

9. Einheit für die Installierung einer Befestigungsvorrichtung, umfassend:
- eine etwa U-förmige Abnahmelehre (150) mit zwei sich etwa symmetrisch zu einer zweiten Achse (151) erstreckenden, und durch einen mittleren Teil (154) verbundenen Schenkeln (152, 153), wobei die Enden (155, 156) der beiden Schenkel koplanar in einer sich senkrecht zur genannten zweiten Achse erstreckenden Ebene sind,
- eine Befestigungsvorrichtungsfamilie nach einem der vorausgegangenen Ansprüche,
wobei die Einheit **dadurch gekennzeichnet** wird, dass:
- der mittlere Teil der Abnahmelehre aus einem Stück mit einem im Hohlraum (107) eines Befestigungselements (101, 121) verschiebbaren Stift (157) ist, wobei der genannte Stift etwa parallel zur zweiten Achse (151) zwischen den beiden Schenkeln (152, 153) der U-Form angeordnet ist, wobei ein Ende (158) des Stiftes und die durch die Enden (155, 156) der Schenkel verlaufende Ebene entfernt voneinander mit einer in Richtung der genannten zweiten Achse gemessenen Abnahmedistanz (159) sind,
- die Abnahmedistanz (159) grösser als die Distanz (109') in Richtung der ersten Achse (102) zwischen dem Grund (108) des Hohlraums (107) und der Grenze (170) zwischen dem Körper und dem geformten Endeabschnitt ist.

10. Einheit nach Anspruch 9, wobei das Ende (158) des Stiftes (157) kugelförmig ist.

11. Einheit nach Anspruch 10, wobei der Stift (157) eine Form aufweist, die komplementär zur Form des Hohlraums (107) über eine sich über mindestens einen Längenabschnitt des Stiftes erstreckende Führungshöhe ist.

12. Einheit nach Anspruch 11, wobei der Stift (157) eine Führungshöhe aufweist, die der größten Tiefe (110) des Hohlraums (107) des längsten Befestigungselements (101, 121) der Familie gleich ist.

13. Verfahren zum Abnahmen des Wahls der Länge eines Befestigungselements unter Verwendung einer Einheit (100) nach einem der Ansprüche 9 bis 12, umfassend eine Befestigungsvorrichtungsfamilie nach einem der Ansprüche 2 bis 8, wobei das genannte Verfahren die folgenden Schritte enthält:
- das Einführen des Befestigungselements (101, 121) in eine Bohrung einer Struktureinheit (114), so dass der Kopf (103) und der geformte Endeabschnitt (105) des genannten Element auf beiden Seiten der Struktureinheit angeordnet sind,
- das Zusammensetzen des Hohlelements (115) auf den geformten Endeabschnitt (105) und das Klemmen des Hohlelements gegen eine Fläche (116) der Struktureinheit,
- das Einführen des Stiftes (157) der Abnahmelehre (150) in den Hohlraum (107) des geformten Endeabschnitts,
- falls das Ende des Stifts den Grund (108) des Hohlraums ohne jeder Berührung der Enden (155, 156) der Schenkel der Abnahmelehre mit der Fläche (116) der Struktureinheit berührt, ist das Befestigungselement dann zu lang.

## Claims

1. Family of fastening devices including at least two fastening elements (101, 121), each one of said elements extending according to a first axis (102) and including a head (103), a smooth body (104) and a shaped end portion (105) which are aligned, said shaping of the end portion consisting in providing a thread or crimping grooves, the fastening elements being provided with shaped ends having identical average external diameters, said family being **characterized in that**:
- a frontal face (106) of the shaped end portion (105) of each of the fastening elements has a cavity (107) extending parallel to the first axis (102) as far as a bottom (108),
- the fastening elements have different maximum tightening capacities (Gmax), said maximum tightening capacity corresponding to the length of the smooth body (104) according to the first axis (102) between the head (103) and the limit (170) between said body and the shaped end portion (105),
- the fastening elements have different minimal tightening capacities (Gmin), said minimal tightening capacity corresponding to the minimal thickness of a structure the fastening element can assemble,
- the fastening elements have identical tightening ranges (P), a tightening range corresponding to the difference between the maximal tightening capacity (Gmax) and the minimal tightening capacity (Gmin) of a fastening element,
the family being configured so that the distance (109') according to the first axis (102) between the bottom (108) of the cavity (107) and the limit (170) between the body and the shaped end portion is identical for all the fastening elements (101, 121).

2. Family of fastening devices according to claim 1, including moreover at least one female element (115) able to be assembled onto a machined end of a fastening element by screwing or crimping.

3. Family of fastening devices according to claim 1 or claim 2, including moreover at least one bush (111) intended to fit around the smooth body (104) of a fastening element.

4. Family of fastening devices according to any one of the preceding claims, wherein the smooth body (104) is truncated.

5. Family of fastening devices according to claim 4, including moreover at least two bushes (111) having a cylindrical external surface and a truncated internal surface, each of the internal surfaces being complementary to a surface of a smooth body (104) of a fastening element, the bushes having before the interference identical external diameters and different amounts of internal surface taper.

6. Family of fastening devices according to any one of the preceding claims, wherein the cavity (107) is a cylindrical bore in the shaped end portion (105).

7. Family of fastening devices according to claim 6, wherein the cavity (107) has a peripheral edge in the form of multilobed continuous curved line.

8. Family of fastening devices according to any one of claims 1 to 5, wherein the cavity (107) is a recess in the external surface on the shaped end portion(s) (105).

9. Unit (100) for installing a fastening device, including:
- at least one check gauge (150) having substantially a U-shape, including two branches (152, 153). substantially symmetrical relative to a second axis (151) and joined together by a central part (154), the ends (155, 156) of the two branches being coplanar in a plane perpendicular to said second axis,
- a family of fastening devices according to anyone of the preceding claims,
the unit being **characterized in that**:
- the central part of the gauge is integral with a pin (157) able to slide in the cavity (107) of the fastening element (101, 121), said pin being arranged between the two branches (152, 153) of the U, substantially parallel to the second axis (151), one end (158) of the pin and the plane extending through the ends (155, 156) of the branches being distant from one another by a check distance (159) measured according to said second axis,
- the check distance (159) is higher than a distance (109') according to the first axis (102) between the bottom (108) of the cavity (107)' and the limit (170) between the body and the shaped end portion.

10. Unit according to claim 9, wherein the end (158) of the pin (157) is ball-shaped.

11. Unit according to claim 10, wherein the pin (157) has a shape (160) complementary to that of the cavity (107) over a guiding height extending over at least a part of the length of the pin.

12. Unit according to claim 11, wherein the pin (157) has a guiding height equal to the greatest depth (110) of the cavity (107) of the longest fastening element (101, 121) of the family.

13. Method for checking the choice of the length of a fastening element, implementing a unit (100) according to any one of the claims 9 to 12, comprising a family of fastening devices according to any one of the claims 2 to 8, said method comprising the following steps of:
- inserting a fastening element (101, 121) into a bore in a structural unit (114), so that the head (103) and the shaped end portion (105) of said element are arranged on both sides of said structural unit,
- assembling the female element (115) on the shaped end portion (105) and tightening the female element against a surface (116) of the structural unit,
- inserting the pin (157) of the check gauge (150) into the cavity (107) in the shaped end portion,
- if the end of the pin is in contact with the bottom (108) of the cavity without the ends (155, 156) of both branches of the gauge being able to be in contact with the surface (116) of the structural unit, then the fastening element is too long.
